# EUROPEAN PATENT APPLICATION

(11) **EP 4 253 485 A1**
(43) Date of publication of application: **04.10.2023**
(21) Application number: 22742731.7
(22) Date of filing: 04.01.2022
(51) Int. Cl.: C09D 5/00, C09D 183/06, C08L 63/00, C08L 33/04, C09J 5/02

(54) **PRIMER COMPOSITION FOR GLASS ADHESIVE**

(30) Priority: 21.01.2021 KR 20210008677
(71) Applicant: KCC Corporation, Seoul 06608 (KR)
(72) Inventor: LEE, Jeong Hyun, Ulsan 44262 (KR)
(74) Representative: Newcombe, Christopher David
(86) International application number: PCT/KR2022/000037
(87) International publication number: WO 2022/158755

(57) **Abstract**

The present invention relates to a primer composition for a glass adhesive, comprising: a first silane polymer comprising an epoxy group and an amino group; a second silane polymer comprising a mercapto group; an epoxy resin; an acrylic polymer; and a pigment, wherein the epoxy resin has an epoxy equivalent of 100 to 500 g/eq.

## Description

### [Technical Field]

The present invention relates to a primer composition for a glass adhesive having excellent storage stability, and excellent glass adhesiveness.

### [Background Art]

When bonding glass to the painting surface of a vehicle body, in order to prevent a glass from being pushed or detached from the painting surface due to insufficient adhesiveness between the painting surface and the glass, which are different materials, in general, a primer is first applied to the painting surface and/or a glass surface, and then a moisture hardening type adhesive (e.g., DGU) is applied on the primer to bond the glass to the painting surface. In this case, the moisture hardening type adhesive contains urethane resin which is a reactant of isocyanate and polyol as a resin component, and contains carbon black as a pigment component, calcium carbonate, etc. and contains a plasticizer such as diisononyl phthalate (DINP). In addition, the primer may contain a film-forming agent such as an epoxy resin, a silane polymer, or an acrylic resin; and additives such as a pigment such as carbon black and an inorganic filler (e.g., titanium oxide, calcium carbide and silicic acid anhydride, etc.).

However, the additives such as pigments or inorganic fillers included to improve adhesiveness and physical properties in the primer may cause precipitation of additive particles in the composition during storage, resulting in a decrease in storage stability. In order to solve such a problem, it has been common to include a dispersant in the primer.

As an alternative to this, Korean Laid-Open Patent Application No. 2017-0016433 (Patent Document 1) discloses a primer composition containing an acrylic copolymer, a titanium compound, and a solvent. However, the composition of Patent Document 1 had poor adhesion due to lack of wettability with the ceramic coating surface of automobile glass, and had a problem in that water resistance and chemical resistance were inferior due to mono-silane and titanium compound.

Therefore, there is a need for research and development on a primer composition for a glass adhesive with excellent storage stability and excellent adhesiveness (cohesiveness) between the glass and adhesive.

### [DISCLOSURE]

### [Technical Problem]

Accordingly, the present invention is to provide a primer composition for a glass adhesive that is excellent in storage stability and is excellent in adhesiveness to a glass.

### [Technical Problem]

The present invention provides a primer composition for a glass adhesive comprising a first silane polymer containing an epoxy group and an amino group, a second silane polymer containing a mercapto group, an epoxy resin, an acrylic polymer, and a pigment, wherein the epoxy resin has an epoxy equivalent of 100 to 500 g/eq.

### [Advantageous Effects]

The primer composition for a glass adhesive according to the present invention comprises a low-equivalent epoxy resin and has excellent storage stability by preventing pigment precipitation in the composition when stored for a long period of time, and comprises two types of silane polymers with different functional groups so that it has excellent adhesiveness due to a rapid coupling reaction (condensation reaction) with a glass, and thus, the primer composition is suitable for use as a primer.

### [Mode for Invention]

Hereinafter, the present invention will be described in detail.

In the present invention, the "weight average molecular weight" and "number average molecular weight"of a resin can be measured by a method well known in the art, and for example, it can represent a value measured by the method of gel permeation chromatograph(GPC) .

In addition, in the specification, the term "(meth)acryl" means "acryl" and/or "methacryl" and the term "acrylate-based" means "acrylate" and/or "methacrylate."

In the specification, the unit "parts by weight" means a weight ratio between components.

A primer composition for a glass adhesive according to the present invention comprises a first silane polymer, a second silane polymer, an epoxy resin, an acrylic polymer, and a pigment. In particular, the primer comprises two types of silane polymers having different reactive groups, so that it may have excellent adhesion due to reaction with a material formed on the surface of the glass or chemical bonding (coupling reaction) to the glass.

In addition, since the primer composition forms a structure in which the oil-based or water-based adhesive applied to one surface of the primer and a primer coating film are chemically bonded to each other as a network in a subsequent process, it exhibits excellent adhesion and solvent resistance, and can function as a primer having very excellent adhesion and cohesiveness to an organic coating film (substrate) formed by curing the adhesive and a glass surface, which is an inorganic material surface.

On the other hand, since a urethane bond is formed between the hydroxyl group of the epoxy resin comprised in the primer composition of the present invention and the excess isocyanate group of the moisture hardening type urethane adhesive subsequently applied, adhesion between layers can be greatly improved.

In addition, two different silane polymers are hydrolyzed by a solvent to form silanol, and then form a urethane bond with excess isocyanate of the moisture hardening type urethane adhesive to be applied subsequently, and at the same time form a siloxane bond with the silicon compound at the part in contact with the glass surface, so that the adhesiveness between the glass surface-primer-urethane adhesive layers may be improved.

### First silane polymer

The first silane polymer serves to impart adhesion and compatibility to an adhesive (substrate) and a glass, which are attachment surfaces for a prepared coating.

The first silane polymer contains an epoxy group and an amino group, and may be prepared from an epoxy-based silane and an amino-based silane. Specifically, the first silane polymer may be prepared by reacting the epoxy-based silane and the amino-based silane at 40 to 60 °C for 20 to 50 hours.

In this case, the epoxy-based silane may be, for example, glycidoxyC₁₋₅ alkyl C₁₋₅ alkoxy silane, and specifically, may be glycidoxyC₁₋₅ alkyltriC₁₋₅ alkoxy silane. Specifically, the epoxy-based silane may be, but is not limited to, glycidoxymethyltrimethoxy silane, glycidoxyethyltrimethoxy silane, glycidoxypropyltrimethoxysilane, glycidoxymethyltriethoxy silane, glycidoxyethyltriethoxy silane, glycidoxypropyltriethoxy silane, glycidoxymethyltripropoxy silane, glycidoxyethyltripropoxy silane, glycidoxypropyltripropoxy silane or the like.

In addition, the amino-based silane may be, for example, a silane containing one or more amino groups. For example, the amino-based silane may be an aliphatic silanes containing two or more amino groups. Specifically, the amino-based silane may be aminoC₁₋₅ alkyl-triC₁₋₅ alkoxy silane, and for example, may be, but is not limited to, aminomethyl-trimethoxy-silane, aminoethyl-trimethoxy-silane, aminopropyl-trimethoxy-silane, aminoethyl-aminopropyl-trimethoxy-silane and the like.

A first solvent may be used in the reaction between the epoxy-based silane and the amino-based silane, and the first solvent may be methylethylketone, ethyl acetate, dimethyl carbonate, methanol, n-butanol, and the like.

The epoxy-based silane and the amino-based silane may react in a weight ratio of 1: 0.1 to 1.1, or 1: 0.4 to 1.0. If the reaction weight ratio of the epoxy-based silane and the amino-based silane is less than the above range, that is, a smaller amount of the amino-based silane is used compared to the epoxy-based silane, the adhesiveness with the adhesive (substrate) may be lowered due to insufficient attaching functional groups. If the reaction weight ration exceeds the above range, that is, an excess amount of amino-based silane is used compared to the epoxy-based silane, an excessive amount of unreacted amino groups in the composition may deteriorate weather resistance and water resistance of the coating film, and storage property during storage may deteriorate.

In addition, the first silane polymer may have an epoxy equivalent (EEW) of 1,300 to 15,000 g/eq, or 3,000 to 13,000 g/eq, and a weight average molecular weight (Mw) of 500 to 3,000 g/mol, or 1,000 to 3,000 g/mol.

If the epoxy equivalent and the weight average molecular weight of the first silane polymer are within the above ranges, there is an effect that the storage property and adhesion are excellent. If the epoxy equivalent of the first silane polymer is less than the above range, the dispersibility of the pigment and/or additive particles may decrease due to the low epoxy equivalent, which may cause a problem of deterioration in storage property. If the epoxy equivalent of the first silane polymer is high, the first silane polymer reacts with the isocyanate group of the adhesive, which is to be coated later, to form fine pores, so a problem of deterioration in adhesion may occur. In addition, if the weight average molecular weight of the first silane polymer is less than the above range, a problem of inferior storage property may occur, and if the weight average molecular weight of the first silane polymer exceeds the above range, the problem of poor adhesion may occur.

The weight average molecular weight (Mw) of the first silane polymer may be smaller than the weight average molecular weight (Mw) of a second silane polymer to be described later. As described above, if two types of silane polymers having different functional groups and different weight average molecular weights are used, reactivity with the glass surface is improved due to the two types of silane polymers having different condensation reactivities with the glass surface, so that adhesion can be improved, and also storage stability can be increased.

On the other hand, if the weight average molecular weight (Mw) of the first silane polymer is greater than the weight average molecular weight (Mw) of the second silane polymer, the condensation reaction is lowered, and the adhesion to the glass surface is lowered, and peeling may occur.

The weight average molecular weight (Mw) of the first silane polymer may be 10 to 14,500 g/mol or 1,000 to 10,000 g/mol smaller than the weight average molecular weight of the second silane polymer. If the difference in weight average molecular weights between the first silane polymer and the second silane polymer is insignificant, such as less than the above range, an excessive amount of unreacted amino groups is present, and thus, a problem of deterioration in storage property of the composition may occur. If the difference exceeds the above range, a problem of deterioration in storage property of the composition occurs due to the occurrence of side reactions.

The first silane polymer may be comprised in the composition in a content of 20 to 50 parts by weight, or 30 to 40 parts by weight relative to 0.5 to 3.5 parts by weight of the second silane polymer. If the content of the first silane polymer is within the above range, there is an effect that long-term storage of the primer and adhesion to the glass can be improved. If the content of the first silane polymer is less than the above range, a problem of deterioration in storage property may occur, and if the first silane polymer is comprised in an amount exceeding the above range, a problem of poor adhesiveness may occur due to a lack of the attaching functional groups with the adhesive.

In addition, the first silane polymer and the second silane polymer to be described later may be comprised in the composition in a weight ratio of 10 to 60: 1. Specifically, the first silane polymer and the second silane polymer may be comprised in the composition in a weight ratio of 10 to 50 : 1, or 12 to 46 : 1. That is, the composition of the present invention may comprise the first silane polymer having a relatively small weight average molecular weight in excess of the second silane polymer having a relatively large weight average molecular weight. If the weight ratio of the first silane polymer and the second silane polymer is included within the above range, silanol functional groups are abundant, and thus there is an effect that adhesion to the glass is excellent. If the weight ratio of the first silane polymer and the second silane polymer is less than the above range, that is, a small amount of the first silane polymer is comprised based on the second silane polymer, there is a problem of insufficient storage stability due to side reactions. If the weight ratio exceeds the above range, that is, an excessive amount of the first silane polymer is comprised based on the second silane polymer, a problem of insufficient adhesion to the glass may occur.

### Second silane polymer

The second silane polymer contains a mercapto group, imparts adhesion to the substrate and the glass, which are attachment surfaces for a prepared coating film, improves weather resistance of the prepared coating film, and improves storage stability of the composition by preventing pigment precipitation.

The second silane polymer may be prepared from, for example, a mercapto-based silane, an amino-based silane, an acrylate-based compound, and an isocyanate compound. If the composition comprises the second silane polymer prepared from the compounds as described above, there is an effect of excellent adhesion to the glass due to a difference in reactivity by comprising different types of silane polymers.

The mercapto-based silane imparts adhesion to the substrate and the glass, which are the attachment surfaces. The mercapto-based silane may be, for example, mercapto C₁₋₅ alkyl C₁₋₅ alkoxysilane, and specifically, may be mercaptoC₁₋₅ alkyltriC₁₋₅ alkoxy silane. Specifically, the mercapto-based silane may be, but is not limited to, mercaptomethyltrimethoxy silane, mercaptoethyltrimethoxy silane, mercaptopropyltrimethoxy silane, mercaptomethyltriethoxy silane, mercaptoethyltriethoxy silane, mercaptopropyltriethoxy silane, mercaptomethyltripropoxy silane, mercaptoethyltripropoxy silane, mercaptopropyltripropoxy silane and the like.

The amino-based silane imparts adhesion to the substrate and the glass, which are the attachment surfaces. The amino-based silane may be, for example, a silane containing one or more amino groups, and specifically, may be a silane containing one amino group. For example, the amino silane may be C₆₋₁₀ aryl amino C₁₋₅ alkyl-triC₁₋₅ alkoxy silane, and for example, may be, but is not limited to, phenylaminomethyltrimethoxy silane, phenylaminoethyltrimethoxy silane, phenylaminopropyltrimethoxy silane, phenylaminomethyltriethoxy silane, phenylaminoethyltriethoxy silane, phenylaminopropyltriethoxy silane and the like.

The acrylate-based compound imparts weather resistance to a prepared coating film. For example, the acrylate-based compound may be aryloxy-alkyl acrylate or C₆₋₁₂ aryloxy-C₁₋₆ alkyl acrylate. Specifically, the acrylate-based compound may contain 2-hydroxy-3-phenoxypropyl acrylate.

The isocyanate compound imparts adhesion to the silane polymer. In addition, the isocyanate compound may be a compound containing one or more isocyanate groups, and for example, may be a compound containing two or more or three or more isocyanate groups. Specifically, the isocyanate compound may have an unreacted isocyanate content (NCO%) of 5 to 20 % by weight, or 8 to 15 % by weight based on the total weight of a compound, but is not limited thereto.

When preparing the second silane polymer, additives such as a second solvent, a catalyst, and a reaction stabilizer may be used. The second solvent may be, but is not limited to, methylethylketone, ethyl acetate, dimethyl carbonate, n-butanol, and the like.

The second silane polymer may be prepared by reacting an amino-based silane, a mercapto-based silane, an acrylate-based compound, and an isocyanate compound in a weight ratio of 1: 2.5 to 6.0: 2.5 to 6.0: 8 to 20, or 1: 3.5 to 5.5: 3.5 to 5.5: 9 to 18.

If the content of the mercapto-based silane is less than the above range, that is, a small amount of mercapto silane is comprised based on the amino-based silane, there is a problem of poor adhesion to the glass. If the content exceeds the above range, that is, an excessive amount of mercapto silane is comprised based on the amino-based silane, unreacted mercapto silane may remain, and thus, a problem of deterioration in storage property may occur.

In addition, if the content of the acrylate-based compound is less than the above range, that is, a small amount of the acrylate-based compound is comprised based on the amino-based silane, there is a problem of deterioration in work adhesion. If the content exceeds the above range, that is, an excessive amount of the acrylate-based compound is comprised based on the silane-based compound, a problem of poor storage property may occur.

Furthermore, if the content of the isocyanate compound is less than the above range, that is, a small amount of the isocyanate compound is comprised based on the amino-based silane, the reaction may not proceed sufficiently and a degree of crosslinking may decrease, and thus, a problem of pigment precipitation may occur. If the content exceeds the above range, that is, an excessive amount of the isocyanate compound is comprised based on the amino-based silane, a problem of deterioration in storage property may occur.

The second silane polymer may have a weight average molecular weight (Mw) of 3,000 to 15,000 g/mol, or 5,000 to 10,000 g/mol, and a number average molecular weight (Mn) of 1,000 to 7,000 g/mol, or 3,000 to 5,000 g/mol. If the weight average molecular weight and number average molecular weight of the second silane polymer are within the above ranges, there is an effect that the storage property and adhesion to the glass are excellent. On the other hand, if the weight average molecular weight and number average molecular weight of the second silane polymer are less than the above ranges, there is a problem of deterioration in adhesion to the glass, and if they exceeds the above ranges, a problem of deterioration in storage property may occur.

The second silane polymer may be comprised in the composition in a content of 0.5 to 3.5 parts by weight, 0.6 to 3.1 parts by weight, or 0.7 to 2.9 parts by weight based on 20 to 50 parts by weight of the fist silane polymer. If the content of the second silane polymer is within the above range, there is an effect that the storage property and adhesion are excellent. In addition, if the content of the second silane polymer is less than the above range, there is a problem of insufficient adhesion to the glass, and if the content of the second silane polymer exceeds the above range, a problem of pigment precipitation due to insufficient storage stability at room temperature may occur.

### Epoxy resin

The epoxy resin may impart adhesion to the glass and the substrate and film formality to the primer composition.

The epoxy resin is a low-equivalent epoxy resin having an epoxy equivalent of 100 to 500 g/eq. If the low-equivalent epoxy resin as described above is comprised in the composition, coating film formation and storage stability are excellent so that pigment precipitation is prevented, thereby improving the storage stability of the composition and product reliability.

In addition, the epoxy resin may be a bisphenol type epoxy resin, particularly, a bisphenol type glycidyl ether. Specifically, the epoxy resin may be a bisphenol A type glycidyl ether. If the bisphenol A type glycidyl ether is used as the epoxy resin, there is an effect of excellent adhesiveness to the substrate.

In general, the urethane adhesive applied to one side of a primer coating film is mixed and applied in the presence of an excess isocyanate component. Some of the excess isocyanate component reacts with moisture, and the remaining excess isocyanate component reacts with the hydroxyl group of the epoxy resin, so that an urethane bond is formed and an effect of enhancing interlayer adhesion between the primer and the adhesive is exhibited.

Specifically, the epoxy resin is a liquid type, and the epoxy resin having an epoxy equivalent weight (EEW) of 100 to 500 g/eq, 100 to 400 g/eq, or 120 to 300 g/eq may be used to appropriately control storage property and adhesiveness. If the epoxy equivalent of the epoxy resin is within the above range, the pigment particles in the primer composition do not precipitate in a short time, so there is an effect of excellent storage property and storage stability. On the other hand, if the epoxy equivalent of the epoxy resin is less than the above range, the functional group capable of reacting with the adhesive to form a bond is reduced, resulting in poor drying property and poor adhesion to the substrate. Also, if the epoxy equivalent of the epoxy resin exceeds the above range, dispersibility in the composition is reduced, so that when the composition is stored at room temperature, a problem of pigment precipitation may occur.

In addition, the epoxy resin may have a viscosity of 10,000 to 15,000 cps, or 11,000 to 14,000 cps at 25 °C. If the viscosity of the epoxy resin is within the above range, there is an effect that the storage property is excellent. If the viscosity of the epoxy resin is less than the above range, the adhesion to the substrate is poor, and if the viscosity of the epoxy resin exceeds the above range, a crosslinking reaction occurs during storage, and a problem of deterioration in storage property may occur.

The epoxy resin may have a weight average molecular weight (Mw) of 1,000 g/mol or less, or 300 to 450 g/mol. If the weight average molecular weight of the epoxy resin is within the above range, storage property may be excellent. In addition, if the weight average molecular weight of the epoxy resin is less than the above range, adhesion to the substrate is poor, and if the weight average molecular weight of the epoxy resin exceeds the above range, a problem of deterioration in storage property may occur.

In addition, the epoxy resin may have a specific gravity of 0.8 to 1.5, or 1.0 to 1.3 at 20°C. If the specific gravity of the epoxy resin at 20°C is within the above range, there is an effect that the storage property is excellent. In addition, if the specific gravity of the epoxy resin is less than the above range, adhesion to the substrate may be poor, and if the specific gravity of the epoxy resin exceeds the above range, a problem of deterioration in storage property may occur.

The epoxy resin may be comprised in the composition in an amount of 2 to 5 parts by weight, or 1.4 to 4.8 parts by weight for the first silane polymer of 20 to 50 parts by weight. If the content of the epoxy resin is within the above range, there is an effect that storage property and adhesion are excellent. In addition, if the content of the epoxy resin is less than the above range, there is a problem of pigment precipitation due to insufficient storage stability when the composition is stored at room temperature. If the content of the epoxy resin exceeds the above range, the foaming or discoloration of the primer layer due to thermal decomposition of the epoxy resin may occur, so that a problem of insufficient weather resistance of the prepared coating film may occur.

### Acrylic polymer

The acrylic polymer may impart tackiness and adhesion to the primer composition.

The acrylic polymer may be directly synthesized according to a known method, or a commercially available product may be used. In this case, the acrylic polymer may be prepared from, for example, an alkyl group-containing (meth)acrylate monomer, an epoxy-containing (meth)acrylate monomer, and a hydroxyl group and an aromatic ring-containing (meth)acrylate monomer.

The alkyl group-containing (meth)acrylate monomer improves the adhesiveness and adhesion of the acrylic polymer. In addition, the epoxy-containing (meth)acrylate monomer reacts with an amino group or imino group of the silane polymer to form an adhesion site (-OH) with adhesive to improve the adhesion of the composition. Furthermore, the hydroxyl group and the aromatic ring-containing (meth)acrylate monomer forms an attachment site (-OH) with the adhesive to improve adhesion of the composition and weather resistance of the primer.

For example, the acrylic polymer may be prepared from a C₁₋₃ alkyl group containing (meth)acrylate monomer, a C₄₋₁₀ alkyl group containing (meth)acrylate monomer, a glycidyl group-containing (meth)acrylate monomer, and a hydroxyl group and C₆₋₁₂ aromatic ring containing (meth) acrylate. Specifically, the acrylic polymer may contain a C₁₋₃ alkyl group containing (meth)acrylate monomer, a C₄₋₁₀ alkyl group containing (meth)acrylate monomer, a glycidyl group-containing (meth)acrylate monomer, and a hydroxyl group and C₆₋₁₂ aromatic ring containing (meth)acrylate in a weight ratio of 1: 0.1 to 5: 0.01 to 1: 0.01 to 1, or 1: 0.5 to 2: 0.2 to 0.6: 0.2 to 0.6. If the weight ratio range of each monomer satisfies the above range, film formability, tackiness, and adhesion may be improved.

If the content of the C₄₋₁₀ alkyl group containing (meth)acrylate monomer is less than the above range, that is, a small amount of C₄₋₁₀ alkyl group containing (meth)acrylate monomer is comprised relative to the C₁₋₃ alkyl group containing (meth)acrylate monomer, coating film formality and adhesion may be inferior. Also, if the content of the C₄₋₁₀ alkyl group containing (meth)acrylate monomer exceeds the above range, that is, an excess of the C₄₋₁₀ alkyl group containing (meth)acrylate monomer is comprised relative to C₁₋₃ alkyl group containing (meth)acrylate monomer, storage property may be reduced.

In addition, if the content of the epoxy group-containing (meth)acrylate monomer is less than the above range, that is, a small amount of the epoxy group-containing (meth)acrylate monomer is comprised relative to the C₁₋₃ alkyl group-containing (meth)acrylate monomer, the coating film formation may be deteriorated. If the content exceeds the above range, that is, an excessive amount of the epoxy group-containing (meth)acrylate monomer is comprised relative to the C₁₋₃ alkyl group-containing (meth)acrylate monomer, storage property may be poor.

If the content of the hydroxyl group and C₆₋₁₂ aromatic ring containing (meth) acrylate is less than the above range, that is, a small amount of the hydroxyl group and C₆₋₁₂ aromatic ring containing (meth)acrylate is comprised relative to the C₁₋₃ alkyl group-containing (meth)acrylate monomer, there is a problem that the curing reaction is not sufficient and the coating film formation is lowered. If the content exceeds the above range, that is, an excessive amount of the hydroxyl group and C₆₋₁₂ aromatic ring containing (meth)acrylate is comprised relative to the C₁₋₃ alkyl group-containing (meth)acrylate monomer, a problem of deterioration in storage property may occur.

The acrylic polymer may have a weight average molecular weight (Mw) of 150,000 to 250,000 g/mol, 170,000 to 220,000 g/mol, or 180,000 to 200,0000 g/mol. If the weight average molecular weight of the acrylic polymer is within the above range, there is an effect that the adhesiveness and workability are excellent. In addition, if the weight average molecular weight of the acrylic polymer is less than the above range, adhesion to the substrate may decrease, and if it exceeds the above range, storage property may decrease.

In addition, a glass transition temperature (Tg) of the acrylic polymer may be 30 to 70 °C, 40 to 60 °C, or 45 to 55 °C. If the glass transition temperature of the acrylic polymer is within the above range, there is an effect that the adhesiveness and workability are excellent. In addition, if the glass transition temperature of the acrylic polymer is less than the above range, adhesion to the substrate may decrease, and if it exceeds the above range, storage property may decrease.

A viscosity of the acrylic polymer may be 200 to 1,500 cps, 400 to 1,000 cps, or 600 to 850 cps at 25 °C. If the viscosity of the acrylic polymer at 25 °C is within the above range, there is an effect that the adhesiveness and workability are excellent. In addition, if the viscosity of the acrylic polymer is less than the above range, adhesion to the substrate may decrease, and if it exceeds the above range, storage property may decrease.

In addition, the acrylic polymer may be comprised in the composition in a content of 5 to 30 parts by weight, or 10 to 20 parts by weight relative to the first silane polymer of 20 to 50 parts by weight. If the content of the acrylic polymer is within the above range, there is an effect that the adhesiveness and workability are excellent. In addition, if the content of the acrylic polymer is less than the above range, adhesion to the substrate may decrease, and if it exceeds the above range, storage property may decrease.

### Pigment

The pigment may implement the color of the primer composition and improve physical properties such as weather resistance, durability, strength, or the like.

Any pigment may be used as the above pigment without particular limitation as long as it is generally comprised in a paint composition and does not deteriorate physical properties and functions. For example, extender pigments, white pigments, black pigments, yellow pigments, red pigments, blue pigments, green pigments, metal powder pigments, pearl type pigments, metallic pigments, or the like may be used as the pigment without limitation.

The pigment may include, preferably, extender pigments such as a barium sulphate(Ba₂SO₄, barite), a baryte, a calcium carbonate(CaCO₃), a clay(Al₂O₃·2SiO₂·2H₂O), a bone meal(3MgO·4SiO₂·H₂0), a silicon dioxide powder(SiO₂), a diatomaceous earth(SiO₂·nH₂O), a silica, a bentonite, a talc, and an aluminum silicate; white pigments such as a titanium oxide(TiO₂), a zinc oxide(ZnO), a lithopon, a zinc sulfide, a white lead(2PbCO₃·Pb(OH)₂), and an antimony oxide(Sb₂O₃); black pigments such as a carbon black, a graphite, and an iron black(Fe₃O₄); yellow pigments such as a chrome yellow(PbCrO₃), a zinc chromate, a cadmium yellow(CdS), a lead cyanide(PbCN₂), a titanium yellow(TiO₂-NiO-Sb₂O₃), and a strontium yellow(SrCrO₄); red pigments such as an iron red(Fe₂O₃), a lead tetroxide(Pb₃O₄), a mercury sulfide(HgS), a cadmium red (mixed crystal of CdS and HgS), a molybdenum red (mixed crystal of PbCrO₄, PbMoO₄ and PbSO₄) and a cuprous oxide(Cu₂O); blue pigments such as a prussian blue(MFe[Fe(CN)₆], M=K, NH₄, Na), an ultramarine(2(Al₂Na₂Si₃O₁₀)·Na₂S₄) and a cobalt blue(CoO·nAl₂O₃); green pigments such as a chromium green (mixture of PbCrO₄ and prussian blue KFe[Fe(CN)₆]), a chromium oxide(Cr₂O₃) and a chromium hydroxide(Cr₂O_{3·}2H₂O); metal powder pigments such as aluminum powder and bronze powder; and pearl pigments such as natural pearl powder and synthetic pearl pigment, and, in order to improve the color and weather resistance of the primer composition of the present invention, carbon black may be used.

The pigment may be comprised in the composition in a content of 5 to 10 parts by weight or 6 to 8 parts by weight relative to 20 to 50 parts by weight of the first silane polymer. If the content of the pigment is less than the above range, the hiding effect and appearance of the cured primer coating film may be deteriorated. If the content of the pigment exceeds the above range, the dispersibility of the pigment in the primer composition is deteriorated, so the pigment takes a long time to disperse, or precipitation occurs during storage of the prepared primer composition, which may cause problems in storage stability and product reliability of the primer.

### Solvent

The primer composition may further comprise a solvent. In this case, the solvent may control the viscosity and drying property of the composition.

The solvent is not particularly limited as long as it can be added to a general primer composition for a glass. For example, the solvent may include an aromatic hydrocarbon-based solvent such as a toluene and a xylene, an aliphatic hydrocarbon-based solvent such as a hexane, an octane, and an isoparaffin, a ketone-based solvent such as an acetone, a methyl ethyl ketone, a methyl isobutyl ketone, an acetate-based solvent such as an ethyl acetate and an isobutyl acetate, an ether-based solvent such as a diisopropyl ether and a 1,4-dioxane, a carbonate-based solvent such as a dimethyl carbonate and a diethyl carbonate, or the like.

In addition, the solvent may be comprised in the composition in a content of 30 to 50 parts by weight or 30 to 40 parts by weight, relative to the first silane polymer of 20 to 50 parts by weight. If the content of the solvent is less than the above range, the viscosity of the primer composition is excessively high, and thus the dispersibility of the pigment in the composition and the storage stability of the composition may be deteriorated. If the content of the solvent exceeds the above range, the viscosity of the primer composition is excessively low, so that flow between mats or a film of a coating may be formed unevenly during application, and problems such as insufficient adhesion to a substrate or adhesive and poor weather resistance of a prepared coating film may occur.

### Additive

The primer composition may further comprise one or more additives such as a storage stabilizer, a dispersant, and a moisture absorbent to improve the physical properties of the coating.

The additive may be comprised in the composition in a content of 1 to 5 parts by weight, or 1.5 to 3.5 parts by weight relative to the first silane polymer of 20 to 50 parts by weight.

The storage stabilizer may improve workability by lengthening the pot life of the primer composition, and improve storage stability by preventing precipitation of the pigment in the composition. In addition, the storage stabilizer is not particularly limited as long as it can be added to the general primer composition for a glass, and for example, may include a diethyl malonate, a trimethyl orthoacetate, a methanol, an ethanol, an isopropyl alcohol, a trimethyl orthoformate, or the like, but is not limited thereto.

The dispersant may improve the storage stability of the composition by uniformly and stably dispersing the pigment in the composition. In addition, the dispersant is not particularly limited unless it is applied to a glass primer to degrade physical properties, and commercially available products may include EFKA PU 4061, LUBRIZOL 2063, DISPERBYK-180, DISPERBYK-110, DISPERBYK-2152, or the like. but is not limited thereto.

The moisture absorbent may control the moisture content of the primer composition and improve workability. In addition, the moisture absorbent is not particularly limited as long as it may be applied to a general primer for a glass, and examples thereof may include a sodium/calcium aluminosilicate, a zeolite, an aldimine, an oxazolidine, a trimethoxyvinylsilane, or the like, but is not limited thereto.

As described above, the primer composition for a glass adhesive according to the present invention has excellent storage stability and excellent adhesiveness to the glass, and thus is suitable for use in fixing the glass of automobiles.

### [Mode for Embodiments]

Hereinafter, the present invention will be described in more detail through examples. However, these examples are only for helping the understanding of the present invention, and the scope of the present invention is not limited to these examples in any sense.

### Synthesis Example 1. Preparation of first silane polymer-1

In a reaction vessel, 3.57 g of N-(beta-aminoethyl)-gamma-aminopropyl-trimethoxy-silane, 8.3 parts by weight of gamma-glycidoxypropyltrimethoxysilane, 7.71 g of methyl ethyl ketone, 15.61 g of dimethyl carbonate, and 1.14 g of methanol were added and reacted at 60 °C for 48 hours to prepare a first silane polymer-1.

The prepared first silane polymer-1 had an epoxy equivalent (EEW) of 3,500 g/eq and a weight average molecular weight (Mw) of 2,800 g/mol.

### Synthesis Examples 2 and 3. Preparation of first silane polymer-2 and 3

The first silane polymer was prepared in the same manner as in Synthesis Example 1 except that the contents of the amino-based silane, N-(beta-aminoethyl)-gamma-aminopropyl-trimethoxy-silane and the epoxy-based silane, gamma-glycidoxypropyltrimethoxysilane in the reaction vessel were adjusted as shown in Table 1.

**[Table 1]**

| | (unit: g) | | | Synthesis Example 1 | Synthesis Example 2 | Synthesis Example 3 |
|---|---|---|---|---|---|---|
| N-(beta-aminoethyl)-gamma-aminopropyl-trimethoxy-silane | | | | 3.57 | 3.32 | 7.42 |
| Gamma-glycidoxypropyltrimethoxysilane | | | | 8.3 | 3.32 | 7.42 |
| Methyl ethyl ketone | | | | 7.71 | 7.71 | 7.71 |
| Dimethyl carbonate | | | | 15.61 | 15.61 | 15.61 |
| Methanol | | | | 1.14 | 1.14 | 1.14 |
| Physical properties of prepared first silane polymer | | | EEW (g/eq) | 3,500 | 1,300 | 3,200 |
| | | | Mw (g/mol) | 2,800 | 1,800 | 2,500 |

### Synthesis Example 2. Preparation of second silane polymer-1

In a reaction vessel, 0.47 g of ethyl acetate, 0.002 g of tin catalyst (stannous octoate, T-9), 0.16 g of (3-mercaptopropyl) trimethoxysilane, 0.18 g of 2-hydroxy-3-phenoxypropylacrylate(HPPA), 0.04 g of N-phenyl-3-aminopropyltrimethoxysilane, 0.65 g of isocyanate compound (Manufacturer: Bayer, Product name: Desmodur HL) and 0.0001 g of hydroquinone as a reaction stabilizer were added and reacted at 60 °C for 5 hours to prepare a second silane polymer-1.

The prepared second silane polymer-1 had a content of unreacted NCO groups (NCO%) of 0.0 wt.% or less, a weight average molecular weight (Mw) of 7,600 g/mol, and a number average molecular weight (Mn) of 3,600 g/mol, and the polydispersity index (PDI) was 2.11.

### Synthesis Examples 5 to 11. Preparation of second silane polymer-2 to 8

The second silane polymer was prepared in the same manner as in Synthesis Example 4, except that the content of the monomers in the reaction vessel was adjusted as shown in Table 2.

**[Table 2]**

| (Unit: g) | | Synthes is | Synthesi s | Synthesi s | Synthesi s | Synthesi s | Synthes is | Synthes is | Synthes is |
|---|---|---|---|---|---|---|---|---|---|
| | | Exampl e4 | Exampl e 5 | Exampl e 6 | Exampl e7 | Example 8 | Exampl e9 | Exampl e 10 | Exampl e 11 |
| Ethyl acetate | | 0.47 | 0.34 | 0.37 | 0.1 | 0.94 | 0.47 | 0.47 | 0.47 |
| Tin catalyst | | 0.002 | 0.001 | 0.001 | 0.0001 | 0.004 | 0.002 | 0.002 | 0.002 |
| (3 -mercaptopropyl) trimethoxysilane | | 0.16 | 0.1 | 0.1 | 0.07 | 0.47 | 0.16 | 0.05 | 0.16 |
| 2-hydroxy-3-phenoxypropylacryl ate | | 0.18 | 0.1 | 0.1 | 0.08 | 0.51 | 0.05 | 0.18 | 0.18 |
| N-phenyl-3-aminopropyltrimeth oxysilane | | 0.04 | 0.02 | 0.02 | 0.01 | 0.1 | 0.04 | 0.04 | 0.04 |
| Desmodur HL | | 0.65 | 0.2 | 0.2 | 0.2 | 1.85 | 0.65 | 0.65 | 0.2 |
| Hydroquinone | | 0.0001 | 0.0001 | 0.0001 | 0.0001 | 0.0002 | 0.0001 | 0.0001 | 0.0001 |
| Physical propertie s of prepared second silane polymer | NCO%(w t%) | 0.0 | 0.0 | 0.0 | 0.0 | 0.55 | 1.96 | 2.29 | 0.0 |
| | Mw(g/mo l) | 7,600 | 9,500 | 9,200 | 9,750 | 7,000 | 3,400 | 2,750 | 9,780 |
| | Mn(g/mol ) | 3,600 | 4,800 | 4,850 | 6,530 | 3,400 | 1,750 | 1,150 | 5,150 |
| | PDI | 2.11 | 1.98 | 1.90 | 1.50 | 2.06 | 1.94 | 2.39 | 1.90 |

### Synthesis Example 12. Preparation of acrylic polymer

In a reaction vessel, 9.49 g of methyl ethyl ketone, 1.62 g of methyl methacrylate(MMA), 1.62 g of butyl methacrylate(BMA), 0.71 g of glycidyl methacrylate(GMA), 0.79 g of 2-hydroxy-3-phenoxypropylacrylate(HPPA), and 0.07 g of tert-butyl peroxide were added and reacted at 80 °C for 12 hours to prepare an acrylic polymer.

The prepared acrylic polymer had a weight average molecular weight (Mw) of 200,000 g/mol, a glass transition temperature (Tg) of 48.1 °C, and a viscosity of 800 cps at 25 °C.

### Experimental Example 1. Preparation of primer composition

In a reaction vessel, 36.33 g of the first silane polymer-1 of Synthesis Example 1, 1.50 g of the second silane polymer-1 of Synthesis Example 4, 14.3 g of the acrylic polymer of Synthesis Example 12, 7 g of carbon black as a pigment, 3 g of epoxy resin-1, 0.36 g of a moisture absorbent, 1.4 g of a dispersant, 0.60 g of a storage stabilizer, 20.8 g of ethyl acetate, and 14.7 g of dimethyl carbonate were added, and stirred for 20 minutes at 600 rpm using a highspeed stirrer to prepare a primer composition.

### Experimental Examples 2 to 16.

A primer composition was prepared in the same manner as in **Experimental** Example 1, except for using the contents of each component described in Tables 3 and 4.

**[Table 3]**

| (Unit: g) | | **Experimental** Examples | | | | | | |
|---|---|---|---|---|---|---|---|---|
| | | 1 | 2 | 3 | 4 | 5 | 6 | 7 |
| First silane polymer | 1 | 36.33 | - | - | 36.33 | 36.33 | 36.33 | 36.33 |
| | 2 | - | 31.1 | - | - | - | - | |
| | 3 | - | - | 39.3 | - | - | - | |
| Second silane polymer | 1 | 1.5021 | 1.5021 | 1.5021 | - | - | 1.5021 | 1.5021 |
| | 2 | - | - | - | 0.7911 | - | - | - |
| | 3 | - | - | - | - | 2.8232 | - | - |
| Carbon black | | 7 | 7 | 7 | 7 | 7 | 7 | 7 |
| Epoxy resin | 1 | 3 | 3 | 3 | 3 | 3 | 2.5 | 4.7 |
| | 2 | - | - | - | - | - | - | - |
| Acrylic polymer | | 14.3 | 14.3 | 14.3 | 14.3 | 14.3 | 14.3 | 14.3 |
| Moisture absorbent | | 0.36 | 0.36 | 0.36 | 0.36 | 0.36 | 0.36 | 0.36 |
| Dispersant | | 1.4 | 1.4 | 1.4 | 1.4 | 1.4 | 1.4 | 1.4 |
| Storage stabilizer | | 0.6 | 0.6 | 0.6 | 0.6 | 0.6 | 0.6 | 0.6 |
| Ethyl acetate | | 20.8 | 20.8 | 20.8 | 20.8 | 20.8 | 20.8 | 20.8 |
| Dimethyl carbonate | | 14.7 | 14.7 | 14.7 | 14.7 | 14.7 | 14.7 | 14.7 |

**[Table 4]**

| (Unit: g) | | | **Experimental** Examples | | | | | | | |
|---|---|---|---|---|---|---|---|---|---|---|
| | | 8 | 9 | 10 | 11 | 12 | 13 | 14 | 15 | 16 |
| 1 silane polyme r | 1 | 36.33 | 36.33 | 36.33 | 36.33 | 36.33 | 36.33 | 36.33 | 36.33 | 36.33 |
| 2 silane polyme r | 1 | - | - | - | - | - | 1.5021 | 1.5021 | 1.5021 | 1.5021 |
| | 4 | 0.4602 | - | - | - | - | - | - | - | - |
| | 5 | - | 3.8742 | - | - | - | - | - | - | - |
| | 6 | - | - | 1.3721 | | - | - | - | - | - |
| | 7 | - | - | - | 1.3921 | - | - | - | - | - |
| | 8 | - | - | - | - | 1.0521 | - | - | - | - |
| Carbon black | | 7 | 7 | 7 | 7 | 7 | 7 | 7 | 7 | 7 |
| Epoxy resin | 1 | 3 | 3 | 3 | 3 | 3 | 6 | - | 1.2 | - |
| | 2 | - | - | - | - | - | - | 3 | - | - |
| | 3 | - | - | - | - | - | - | - | - | 3 |
| Acrylic polymer | | 14.3 | 14.3 | 14.3 | 14.3 | 14.3 | 14.3 | 14.3 | 14.3 | 14.3 |
| Moisture absorbent | | 0.36 | 0.36 | 0.36 | 0.36 | 0.36 | 0.36 | 0.36 | 0.36 | 0.36 |
| Dispersant | | 1.4 | 1.4 | 1.4 | 1.4 | 1.4 | 1.4 | 1.4 | 1.4 | 1.4 |
| Storage stabilizer | | 0.6 | 0.6 | 0.6 | 0.6 | 0.6 | 0.6 | 0.6 | 0.6 | 0.6 |
| Ethyl acetate | | 20.8 | 20.8 | 20.8 | 20.8 | 20.8 | 20.8 | 20.8 | 20.8 | 20.8 |
| Dimethyl carbonate | | 14.7 | 14.7 | 14.7 | 14.7 | 14.7 | 14.7 | 14.7 | 14.7 | 14.7 |

Table 5 below shows the manufacturer and product name of each component used in **Experimental** Examples.

**[Table 5]**

| Component | Compound name, or manufacturer and product name |
|---|---|
| Epoxy resin-1 | Bisphenol A type epoxy resin (EEW: 184 to 190g/eq, Viscosity at 25 °C: |
| | 12,500cps, Specific gravity at 20 °C: 1.17, Mw: 400 g/mol) |
| Epoxy resin-2 | Bisphenol A type epoxy resin (EEW: 1200g/eq, Mw: 1,800 g/mol) |
| Epoxy resin-3 | Bisphenol A type epoxy resin (Kukdo Chemical., YD-012, EEW: 600~620 g/eq) |
| Storage stabilizer | Diethyl malonate |
| Moisture absorbent | Sodium/calcium aluminosilicate |
| Dispersant | Hyperbranched polyester |

### Test Example: Evaluation of physical properties

The physical properties of the primer compositions of **Experimental** Examples were measured in the following manner, and the results were shown in Table 6 below.

### (1) Water resistance

The composition of **Experimental** Example was applied on the surface of the glass with an application area of 25 mm (width) X 150 mm (length) X 3 mm (height), left for 72 hours under conditions of 20 °C and 65 % relative humidity, and then a specimen was exposed to Xeon WEATHER-O-METER (WOM) for 1,000 hours. After the exposure, the specimen was taken out and left at 20 °C for 1 hour. Then, the primer layer at one end of the specimen was cut with a 15 mm knife, and the substrate of the coating was held with one hand and peeled off using a knife at an angle of 30°. Thereafter, adhesion was evaluated by calculating the area of the adhesive that did not adhere to the primer (interface peeled off between the primer layer and the adhesive) as a percentage of the total area of the adhesive layer after curing. In this case, the adhesion was evaluated as better as the attached area increased.

Here, XENON test conditions were performed according to MS600-35.

### (2) Shear strength

The composition was coated on a glass and cured for 7 days at 20 °C and 65% relative humidity to prepare a 5 mm thick dogbone-shaped specimen, and then the shear strength was measured with a Universal Testing Machine(UTM).

### (3) Adhesion

The composition was applied to a glass in 120 mm (length) X 10 mm (width) X 5 mm (thickness), and a test piece was prepared by compressing a urethane sealant (manufacturer: KCC, product name: PU9510(S-P2P)) and an adhesive (manufacturer: KCC, product name: PU9370-BTX) thereon. Thereafter, the test piece was cured at 20 °C and 65 % relative humidity for 7 days.

Thereafter, the primer layer on one end of the test piece was cut with a 15 mm knife, and the substrate of the painting was held with one hand and peeled off using a knife at an angle of 30°. After curing, the adhesion was evaluated by calculating the area of the adhesive that did not adhere to the primer (interface peeled off between primer layer and adhesive) as a percentage of the total area of the adhesive layer after curing. In this case, the adhesion was evaluated to be better as the attached area was higher.

### (4) Work adhesion

The composition was applied to a glass in 120 mm (length) X 10 mm (width) X 5 mm (thickness), and left at 20 °C and 65 % relative humidity for 3 months. Then, a test piece was prepared by compressing a urethane sealant (manufacturer: KCC, product name: PU9510(S-P2P)) and an adhesive (manufacturer: KCC, product name: PU9370-BTX) thereon.

The test piece was stored at 20 °C and 65% relative humidity. When 7 days had elapsed from the adhesive application date, an adhesion test was conducted to observe the state of the adhesive interface. Here, the adhesion test was performed in the same manner as in item (3).

### (5) Storage property

Storage stability was evaluated by visually observing the precipitation of carbon black in the primer composition.

Specifically, after leaving the composition at 20 °C for 1 week, if the coating film of the supernatant was black, it was evaluated as good. After leaving the composition at 20 °C for 1 week, if the coating film of the supernatant was close to black, it was evaluated as poor. After leaving the composition at 20 °C for 1 week, if the coating film of the supernatant was gray, it was evaluated as weak. After leaving the composition at 20 °C for 1 week, if the coating film of the supernatant was not black, it was evaluated as defective.

**[Table 6]**

| | Weather resistance | Shear strength (MPa) | Adhesion | Work adhesion | Storage stability |
|---|---|---|---|---|---|
| Target | - | 3.0 MPa or more | 90 % or more | 90 % or more | - |
| Experimental Example 1 | Good | 4.2 | 100% | 100% | Good |
| Experimental Example 2 | Good | 4.1 | 98% | 100% | Good |
| Experimental Example 3 | Good | 4 | 100% | 100% | Poor |
| Experimental Example 4 | Good | 4.2 | 95% | 100% | Good |
| Experimental Example 5 | Good | 4.3 | 100% | 100% | Week |
| Experimental Example 6 | Good | 3.0 | 100% | 100% | Good |
| Experimental Example 7 | Week | 3.5 | 100% | 100% | Good |
| Experimental Example 8 | Good | 3.9 | 80% | 100% | Good |
| Experimental Example 9 | Good | 4.1 | 100% | 100% | Defective |
| Experimental Example 10 | Poor | 2.8 | 100% | 80% | Good |
| Experimental Example 11 | Good | 3.7 | 85% | 100% | Good |
| Experimental Example 12 | Good | 4.2 | 90% | 100% | Defective |
| Experimental Example 13 | Poor | 3.4 | 85% | 100% | Good |
| Experimental Example 14 | Good | 3.5 | 100% | 100% | Defective |
| Experimental | Good | 3.0 | 100% | 100% | Defective |
| Example 15 | | | | | |
| Experimental Example 16 | Good | 3.6 | 100% | 100% | Defective |

As shown in Table 6, compared to Experimental Examples 4 to 16, the compositions of Experimental Examples 1 to 3 were excellent in adhesion, work adhesion and storage stability, and the specimens prepared therefrom were excellent in both weather resistance and shear strength.

Specifically, compared to Experimental Example 8 containing a small amount of the second silane polymer, Experimental Examples 1 to 7 containing an appropriate amount of the second silane polymer exhibited excellent adhesion.

In addition, compared to Experimental Example 9 containing an excessive amount of the second silane polymer, Experimental Examples 1 to 7 containing an appropriate amount of the second silane polymer had excellent storage stability and did not cause precipitation of the pigment, carbon black.

In addition, compared to Experimental Example 10 containing the second silane polymer-6 using a small amount of the acrylate-based compound compared to the amino-based silane, Experimental Examples 1 to 7 were excellent in shear strength and work adhesion.

Furthermore, compared to Experimental Example 11 using the second silane polymer-7 with a small amount of the mercapto-based silane compared to the amino-based silane, Experimental Examples 1 to 7 had excellent adhesion of 95 % or more.

In addition, compared to Experimental Example 12 using the second silane polymer-8 with a small amount of the isocyanate compound compared to the amino-based silane, Experimental Examples 1 to 7 had excellent storage stability and did not cause precipitation of the pigment, carbon black.

Compared to Experimental Example 13 containing an excessive amount of the epoxy resin, Experimental Examples 1 to 7 did not cause foaming or discoloration of the primer layer due to thermal decomposition of the epoxy resin, and thus had excellent weather resistance and excellent adhesion to the glass.

In addition, compared to Experimental Examples 14 and 16 containing the epoxy resin-2 having a high epoxy equivalent and Experimental Example 15 containing a small amount of the epoxy resin, Experimental Examples 1 to 7 had excellent storage stability, and no precipitation of the pigment, carbon black.

## Claims

1. A primer composition for a glass adhesive comprising a first silane polymer containing an epoxy group and an amino group, a second silane polymer containing a mercapto group, an epoxy resin, an acrylic polymer, and a pigment,
wherein the epoxy resin has an epoxy equivalent(EEW) of 100 to 500 g/eq.

2. The primer composition of claim 1, wherein the first silane polymer has a smaller weight average molecular weight than that of the second silane polymer,
the first silane polymer and the second silane polymer are comprised in a weight ratio of 10 to 60: 1.

3. The primer composition of claim 1, wherein the second silane polymer is prepared by reacting an amino-based silane, a mercapto-based silane, an acrylate-based compound, and an isocyanate compound in a weight ratio of 1: 2.5 to 6.0: 2.5 to 6.0: 8 to 20.

4. The primer composition of claim 1, wherein the epoxy resin has a viscosity of 10,000 to 15,000 cps at 25 °C and a weight average molecular weight of 1,000 g/mol or less.

5. The primer composition of claim 1, wherein the primer composition comprises 20 to 50 parts by weight of the first silane polymer, 0.5 to 3.5 parts by weight of the second silane polymer, 2 to 5 parts by weight of the epoxy resin, 5 to 30 parts by weight of the acrylic polymer, and 5 to 10 parts by weight of the pigment.
